# EUROPÄISCHE PATENTANMELDUNG

(11) **EP 1 093 035 A2**
(43) Veröffentlichungstag der Anmeldung: **18.04.2001**
(21) Anmeldenummer: 00119647.6
(22) Anmeldetag: 08.09.2000
(51) Int. Cl.: G03H 1/00, G03H 1/24

(54) **Abbildung eines Ausschnittes der Oberfläche eines Himmelskörpers, Verfahren zur Herstellung der Abbildung und Verwendung der Abbildung**

(30) Priorität: 15.10.1999 CH 188699
(71) Anmelder: Klingenberg, Franz, 9200 Gossau (CH)
(72) Erfinder: Klingenberg, Franz, 9200 Gossau (CH)
(74) Vertreter: OK pat AG

(57) **Zusammenfassung**

Eine reliefartig erscheinende **Abbildung** eines Ausschnittes (**K, G**) der Oberfläche eines Himmelskörpers, insbesondere der Erde, wird durch ein Karten-Hologramm auf einer Trägerfolie (**F**) gebildet. Das **Verfahren** zur Herstellung dieses Karten-Hologrammes umfasst die Ermittlung von Daten, welche die dreidimensionale Form des Ausschnitts bzw. ein digitales Terrain-Modell (**DTM**) beschreiben, sowie die Erzeugung eines Master-Hologramms (**MH**) aufgrund dieses digitalen Terrain-Modells (**DTM**). Die Karten-Hologramme können je nach Zweck unbearbeitet oder bearbeitet **Verwendung** finden.

## Beschreibung

Gegenstand der Erfindung ist eine Abbildung eines Ausschnittes der Oberfläche eines Himmelskörpers nach dem Oberbegriff des Anspruchs **1**, ein Verfahren zur Herstellung einer solchen Abbildung nach dem Oberbegriff des Anspruchs **5** und eine Verwendung einer solchen Abbildung nach dem Oberbegriff des Anspruchs **9** bzw. **10**.

Zweidimensionale Abbildungen von Ausschnitten der Oberflächen von Himmelskörpern werden im allgemeinen als Karten und im Falle der Erde als Landkarten bezeichnet. Die abgebildeten Oberflächen sind, solange es sich um gewissermassen harte Oberflächen und nicht um Wasserspiegel handelt, in Wirklichkeit dreidimensional. Wasserspiegel sind in Wirklichkeit auch nicht eben sondern infolge der Erdkrümmung eigentlich Kugelflächen, doch kann dies in vielen Fällen vernachlässigt werden. Für gewisse Verwendungszwecke, beispielsweise für Strassenkarten, kann diese Dreidimensionalität vernachlässigt werden, da sie für den Benutzer keine wesentliche Rolle spielt. Für zahlreiche andere Verwendungszwecke ist es erwünscht oder notwendig, mittels der zweidimensionalen Karten auch diejenigen Informationen zu vermitteln, welche die Dreidimensionalität der dargestellten Oberflächen beschreiben. Hierfür sind verschiedene karthographische Darstellungsweisen bekannt. Ältere Karten, die heute kaum mehr im Gebrauch sind, waren häufig als Schraffenkarten ausgebildet; solche Schraffenkarten ergeben einen verhältnismässig anschaulichen Gesamteindruck, sind aber bezüglich der Einzelheiten der Dreidimensionalität eher ungenau. In neuerer Zeit werden daher für wandertouristische, bergsteigerische, technische und militärische Zwecke vorwiegend Kurvenkarten hergestellt; die Kurven dieser Kurvenkarten sind die geometrischen Orte von Punkten mit gleichen Höhen über Meer, und im allgemeinen sind diese Kurven äquidistant. Kurvenkarten sind also eigentlich zweidimensionale Abbildungen von dreidimensionalen Oberflächen, die in einem ebenen Koordinatennetz angeordnet und als Parameterdarstellungen ausgebildet sind, wobei die Parameterlinien Kurven gleicher Höhe über Meer sind. Einerseits sind Kurvenkarten vorteilhaft, da sie verhältnismässig genau sind und somit eine hohe Informationsquantität besitzen, anderseits ist die Informationsqualität von Kurvenkarten in vielen Fällen unbefriedigend. Um aus einer Kurvenkarte eine dreidimensionale Vorstellung zu gewinnen, muss ein Betrachter ein gutes räumliches Vorstellungsvermögen und eine gewisse Übung im Karten lesen haben; ausserdem muss zur Betrachtung der Karte ein gewisse Zeitspanne zur Verfügung stehen, die natürlich um so grösser ist, je weniger geübt der Betrachter ist; eine gewisse Hilfe beim Lesen von Kurvenkarten bedeutet es, wenn sie schattiert sind, beispielsweise also eine Schattenplastik mit Nord-West- Beleuchtung aufweisen. Neuerdings existieren auch Karten auf elektronischen Speicher; bekannt ist beispielsweise ein Atlas der Schweiz, gespeichert auf CD als digitales Terrainmodell; am Bildschirm visualisierbar ist ein Schattenrelief, das von einem Benutzer auch interaktiv bearbeitet werden kann. Das visualisierbare Schattenrelief gibt zwar ein verhältnismässig gutes Bild vom dargestellten Terrain, aber es ist ein grosser Nachteil, dass dazu ein PC samt Bildschirm vorhanden sein muss. Aus diesem Grunde eignet sich dieser Atlas der Schweiz auch nicht zum Gebrauch im Gelände.

Dieselbe Informationsquantität, jedoch eine stark verbesserte Informationsqualität erhält man, wenn anstelle einer zweidimensionalen Abbildung in Form einer Karte eine dreidimensionale Abbildung in Form eines Reliefs zur Verfügung steht. Allerdings sind Reliefs, gerade wegen ihrer Dreidimensionalität, viel unpraktischer als die zweidimensionalen Karten; insbesondere nimmt ein Relief mehr Raum ein als eine Karte, und Reliefs sind im Gegensatz zu Karten im allgemeinen nicht stapelbar, es sei denn, sie bestehen nicht aus einem massiven Gebilde sondern lediglich aus einer deformierten Folie, in welcher Ausführung sie aber sehr beschädigungsanfällig sind. Reliefs eignen sich somit schlecht zur Inkorporation in Bücher oder Akten und noch schlechter zur Mitnahme ins Feld. Diese Nachteile werden verstärkt durch die Tatsache, dass Reliefs im allgemeinen stark überhöht sein müssen, damit sie die angestrebte Anschaulichkeit aufweisen.

Es sind ferner Abbildungsweisen bekannt, mit welchen der Versuch gemacht wurde, die Handlichkeit von zweidimensionalen Abbildungen, also Karten, mit der Anschaulichkeit von dreidimensionalen Abbildungen, also Reliefs, zu kombinieren. Derartige unter der Bezeichnung Anaglyphen-Bilder bekannte Abbildungen werden so hergestellt, dass sie aus einer ersten und einer zweiten Abbildungskomponente bestehen. Die beiden Abbildungskomponenten sind gleich oder nahezu gleich, und sie werden mit geringen örtlichen Verschiebungen entsprechend Parallaxen und in zwei unterschiedlichen Farben auf denselben Träger, beispielsweise Papier, gedruckt. Dem Betrachter erscheinen die beiden zweidimensionalen Abbildungskomponenten als dreidimensionale Abbildung, allerdings nur, wenn er sie mittels einer Spezialbrille mit zwei unterschiedlich gefärbten Brillengläsern betrachtet. Der Nachteil solcher Abbildungen besteht, abgesehen von der verhältnismässig aufwendigen Drucktechnik, in der Notwendigkeit der Verwendung dieser Spezialbrille.

Die **Aufgabe** der Erfindung wird somit darin gesehen,
- eine Abbildung der eingangs genannten Art zu schaffen, welche die Handlichkeit zweidimensionaler Abbildungen aufweist und welche gleichzeitig eine Informationsqualität in der Art eines Reliefs liefert, wie sie etwa durch zweidimensionale, mit einer Betrachtungshilfe bzw. Spezialbrille zu betrachtende Abbildungen erreicht wird, allerdings ohne die Verwendung der Betrachtungshilfe;
- ein Verfahren zur Herstellung einer solchen Abbildung aufzuzeigen; und
- eine Verwendung einer solchen Abbildung vorzuschlagen.

Die **Lösung** dieser Aufgabe erfolgt
- für die Abbildung durch die Merkmale des kennzeichnenden Teils des Anspruchs **1**;
- für das Verfahren durch die Merkmale des kennzeichnenden Teils des Anspruchs **5**; und
- für die Verwendung durch die Merkmale des kennzeichnenden Teils des Anspruchs **9** bzw. **10**.

Bevorzugte Weiterbildungen der erfindungsgemässen Abbildung und des erfindungsgemässen Verfahrens sind durch die jeweiligen abhängigen Ansprüche **2** bis **4** und **6** bis **8** definiert.

Durch die Erfindung erhält man eine Abbildung, die als Karten-Hologramm oder als topographisches Hologramm bezeichnet wird und die nicht nur die Handlichkeit einer zweidimensionalen, auf einer Trägerfolie angebrachten Darstellung und - mindestens fiktiv - die Anschaulichkeit einer dreidimensionalen Darstellung besitzt, sondern die ausserdem ohne besondere Betrachtungshilfen wie Spezialbrillen betrachtet werden kann.

Besonders vorteilhaft ist es, wenn ein solches Kartenhologramm nicht ein nur unter kohärentem Licht, also Laserlicht, betrachtbares Laser-Transmissionshologramm bzw. Master-Hologramm sondern ein unter überall vorhandenem Weisslicht betrachtbares Hologramm ist, beispielsweise ein Dichromat-Glas-Hologramm, Weisslicht-Photopolymer-Hologramm bzw. Weisslicht-Reflexions-Hologramm oder ein Regenbogen- bzw. Präge-Hologramm.

Die höchste Qualität, allerdings aber auch die höchsten Herstellungskosten, weisen Dichromat-Glas-Hologramme auf. Weisslicht-Reflexions-Hologramme sind qualitativ besser als Präge-Hologramme, hingegen haben Präge-Hologramme den Vorteil, dass sie, ausgehend vom Master-Hologramm, durch ein Kopierverfahren in hohen Stückzahlen verhältnismässig preisgünstig hergestellt werden können. Man unterscheidet ferner zwischen virtuellen und reellen Hologrammen; virtuelle Hologramme bzw. Bilder sind pseudoskopisch, reelle Hologramme können auf Flächen projiziert werden.

Im weiteren gibt es sogenannte Bildebenen-Hologramme. Abgebildete Flächen scheinen Bildebenen-Hologrammen hinter oder vor einer Bildebene bzw. hinter oder vor der Fläche der Folie des Hologrammes zu liegen. Es gibt auch Bildebenen-Hologramme, bei welchen ein Teil der abgebildeten Flächen hinter und ein Teil der abgebildeten Flächen vor der Folie des Hologrammes liegt. Besonders vorteilhaft und anschaulich ist es hierbei, Flächen unterhalb einer bestimmten Höhe über Meer als virtuelle und Flächen oberhalb dieser Höhe über Meer als reale Hologramme bzw. Hologrammbereiche darzustellen.

Insbesondere kann die Fläche bestimmter Höhe, welche scheinbar mit der Hauptausdehnung der Trägerfolie zusammenfällt, der Meereshöhe oder gegebenenfalls einer anderen Höhenkote des Wasserspiegels eines Gewässers entsprechen. Die unter Wasser befindlichen Teile der gewissermassen harten Oberfläche des Himmelskörpers, im allgemeinen also der Erde, erscheinen dem Betrachter dann als virtueller Hologrammbereich, also als eine oder mehrere Ausnehmungen bzw. Kavitäten, während die über Wasser befindlichen Teile dem Betrachter als realer Hologrammbereich, also als Vorsprünge, erscheinen. Liegen allerdings im abgebildeten Ausschnitt mehrere Seen in verschiedenen Meereshöhen, so kann die eben beschriebene Trennung von realem und virtuellen Hologrammbereich nur für einen der Seen mit dessen Wasserspiegel zusammenfallen.

Das erfindungsgemässe Verfahren zur Herstellung der neuen Abbildungen bzw. topographischen Hologramme bzw. Karten-Hologramme umfasst mehrere Schritte. Als erstens wird die dreidimensionale Form der abzubildenden Oberfläche ermittelt. Diese Form kann beispielsweise in digitalen Daten als sogenanntes digitales Terrain-Modell bekannt sein. Aus diesen digitalen Daten kann dann ein physisches Positivmodell in Form eines Stereolithos hergestellt werden. Das Stereolitho dient als Basis für ein nach dem üblichen Verfahren hergestelltes Master-Hologramm.

Das Master-Hologramm ergibt, wie schon erwähnt, nur dann eine dem Betrachter dreidimensional erscheinende Abbildung, wenn es unter Laserlicht betrachtet wird. Daher wird vorzugsweise aufgrund des Master-Hologrammes nach Techniken, die jedem Fachmann bekannt sind, ein Hologramm hergestellt, das auch unter Weisslicht dreidimensional erscheinende Abbildungen ergibt, beispielsweise ein Dichromat-Glas-Hologramme, ein Weisslicht-Photopolymer-Hologramm oder ein Präge-Hologramm.

Es hat sich als günstig erwiesen, Trägerfolien von folienförmigen Hologrammen auf einer oder zwischen zwei transparenten Stabilisierungsfolien anzuordnen, um sie vor Beeinträchtigungen verschiedenster Art zu schützen.

Abbildungen nach der Erfindung, die als topographische Karten-Hologramme bezeichnet werden, lassen sich vielfältig verwenden. Ohne weitere Bearbeitung dienen sie als Anschauungsmaterial. Hierzu können sie in verhältnismässig kleinen Abmessungen hergestellt werden, so dass sie sich problemlos in mehrseitigen schriftlichen Publikationen integrieren oder in der Art von Karteikarten aufbewahren lassen. Derartige Karten-Hologramme dienen beispielsweise zur Verdeutlichung schriftlicher Abhandlungen zu didaktischen, publizistischen oder wissenschaftlichen Zwecken, aber auch für den touristischen Feldgebrauch, insbesondere zur Darstellung wichtiger bzw. singulärer Objekte wie beispielsweise Matterhorn, Ayers Rock, Mount Rushmore. Grossformatige Karten-Hologramme eignen sich ferner hervorragend für Ausstellungen und Präsentationen. Karten-Hologramme, in denen Flächen in etwa gleichen Massstäben dargestellt sind wie in üblichen Land - und Seekarten und die im fertigen Zustand entsprechende Abmessungen aufweisen, können anstelle von oder ergänzend zu Land- oder Seekarten verwendet werden; insbesondere für Freizeit-Kapitäne, die wenig Übung im Umgang mit Seekarten haben, dürften Seekarten-Hologramme von grossem Nutzen sein. Besonders empfehlen sich solche Karten für Gebiete mit Untiefen, Schärengebiete und Hafeneinfahrten. Im weiteren können die neuen Abbildungen bzw. die neuen topographischen Hologramme in verschiedenen Gebieten der Technik nutzbringend verwendet werden. Als Beispiel sollen die Hydrographie mit Wassereinleitungen und Wasserfassungen genannt sein, sowie auch die Bestimmung von günstigen Stellen für die Errichtung von ErdölBohrinseln.

Für gewisse Zwecke, insbesondere im Zusammenhang mit Überflutungen von Landstrichen, können bearbeitete Karten-Hologramme von grossern Nutzen sein. In Bildebenen-Hologrammen lassen sich durch eine Verschiebung der Trennfläche bzw. Bildebene zwischen ,oberem' und ,unterem' Hologrammbereich für stehende oder langsam fliessende Gewässer Wasserstands-Regulierungen, Wasserspiegel-Änderungen infolge von Klimaänderungen, Überflutungen infolge von Hochwasser oder Ausdehnungen von Stauseen in Funktion verschiedener Stauhöhen bei der Projektierung von Staudämmen anschaulich darstellen.

Ein weiterer Verwendungszweck für Karten-Hologramme ist die Darstellung von Gebirgen und insbesondere von Kletterwänden wie beispielsweise die Eiger- oder die Badile-Wand. Bekanntlich verliert ein Kletterer in solchen Wänden, die ja keine Ebenen sind, leicht die Übersicht, da ja von vielen Stellen nur sehr geringe Wandbereiche einsehbar sind. Ein Karten-Hologramm, bei welchem die der Folie entsprechende Ebene vorzugsweise nicht horizontal sondern etwa entsprechend der mittleren Wandneigung gewählt werden könnte, würde es gestatten, in jeder Lage den Überblick zu behalten.

Sehr anschaulich lassen sich auch Veränderungen darstellen, indem zwei mehrere in zeitlich Abständen erstellte Karten-Hologramme verglichen werden. Auf diese Weise können beispielsweise Erosionen, Verlandungen in Gewässern, Wanderungen von Sanddünen, Veränderungen von Gletschern und Veränderungen von Eisdecken von Meeren dargestellt werden.

Weitere Eigenschaften und Vorteile der Erfindung werden im folgenden anhand von Ausführungsbeispielen und mit Bezug auf die Zeichnung ausführlich beschrieben. Es zeigen:
- **Fig. 1A**: das erfindungsgemässe Verfahren, in einem Flussdiagramm;
- **Fig. 1B**: das Prinzip der Echolot-Messung zur Ermittlung eines unter Wasser befindlichen Profils, in einer vereinfachten, schematischen Darstellung;
- **Fig. 2A**: ein erstes Karten-Hologramm, mit der Kavität eines Sees, in einer Darstellung des sich einem Betrachter präsentierenden fiktiven Aspektes, in einem Schnitt senkrecht zur Trägerfolie des Karten-Hologrammes;
- **Fig. 2B**: die im Karten-Hologramm gemäss Fig. 2A dargestellte Kavität, von oben gesehen;
- **Fig. 2C**: ein zweites Karten-Hologramm, mit der Kavität des in den Fig. 2A, 2B dargestellten See und dem den See umgebenden Ge lände, in einer Darstellung des sich einem Betrachter präsentierenden Aspektes, in einem Schnitt senkrecht zur Trägerfolie des Karten-Hologrammes;
- **Fig. 3A**: ein drittes Karten-Hologramm, mit der Kavität eines See und mit dem den See umgebenden Gelände, wobei der Wasserspiegel des Sees in der üblichen Meereshöhe liegt, in einer Darstellung des sich einem Betrachter präsentierenden Aspektes, in einem Schnitt senkrecht zur Trägerfolie des Karten-Hologrammes;
- **Fig. 3B**: die im Karten-Hologramm gemäss Fig. 3A dargestellte Kavität und das umgebende Gelände, von oben gesehen;
- **Fig. 3C**: ein bearbeitetes Karten-Hologramm, mit der Kavität des Sees und mit dem den See umgebenden Gelände gemäss den Fig. 3A, 3B, wobei der Wasserspiegel des Sees über der üblichen Meereshöhe liegt, in einer Darstellung des sich einem Betrachter präsentierenden Aspektes, in einem Schnitt senkrecht zur Trägerfolie des Karten-Hologrammes;
- **Fig. 3D**: die im Karten-Hologramm gemäss Fig. 3C dargestellte Kavität und das umgebende Gelände, von oben gesehen;
- **Fig. 3E**: ein weiteres bearbeitetes Karten-Hologramm, mit der Kavität des Sees und mit dem den See umgebenden Gelände gemäss den Fig. 3A, 3B, wobei der Wasserspiegel des Sees unter der üblichen Höhe liegt, in einer Darstellung des sich einem Betrachter präsentierenden Aspektes, in einem Schnitt senkrecht zur Trägerfolie des Karten-Hologrammes;
- **Fig. 3F**: die im Karten-Hologramm gemäss Fig. 3E dargestellte Kavität und das umgebende Gelände, von oben gesehen;
- **Fig. 4A**: ein Karten-Hologramm, die Kavität des Bodensees darstellend;
- **Fig. 4B**: den Umriss des Bodensees; und
- **Fig. 4C**: eine Aufnahme des Hologrammes der Fig. 4A.

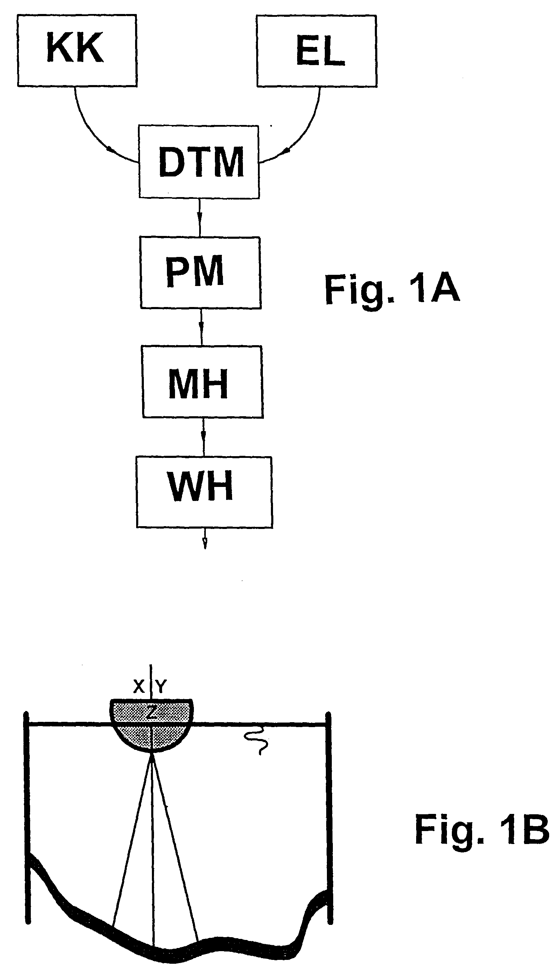

**Fig. 1A** zeigt die Herstellung einer Abbildung bzw. eines Karten-Hologrammes für einen Ausschnitt der Oberfläche eines Himmelskörpers, wobei im speziellen Fall der Himmelskörper die Erde und der Ausschnitt ein See sein soll. Die Daten, welche die Form des Ausschnittes der Oberfläche beschreiben, werden entweder durch eine Echolot-Messung **EL** ermittelt oder stehen in Form einer Kurvenkarte **K** zur Verfügung. Aus der Echolot-Messung **EL** und/oder aus der Kurvenkarte **KK** wird ein digitales Terrain-Modell **DTM** erstellt. Aufgrund des digitalen Terrain-Modells **DTM** wird ein analoges Positiv-Modell **PM** hergestellt, das der unter dem Wasserspiegel liegenden Ausnehmung bzw. Kavität **K** entspricht. Ausgehend von diesem analogen Positiv-Modell **PM** wird anschliessend in üblicher Weise ein Master-Hologramm **MH** hergestellt. Anschliessend wird durch ein ebenfalls übliches Kopierverfahren ausgehend vom Master-Hologramm **MH** ein Weisslicht-Reflexions-Hologramm **WH** erzeugt, welches das Endprodukt des Verfahrens ist. Karten-Hologramme können aber auch direkt aus einem Datensatz hergestellt werden, welcher eine Vielzahl von jeweils einen Punkt definierenden Datentripeln umfasst; im vorliegenden Falle entspricht dieser Datensatz dem digitalen Terrain-Modell.

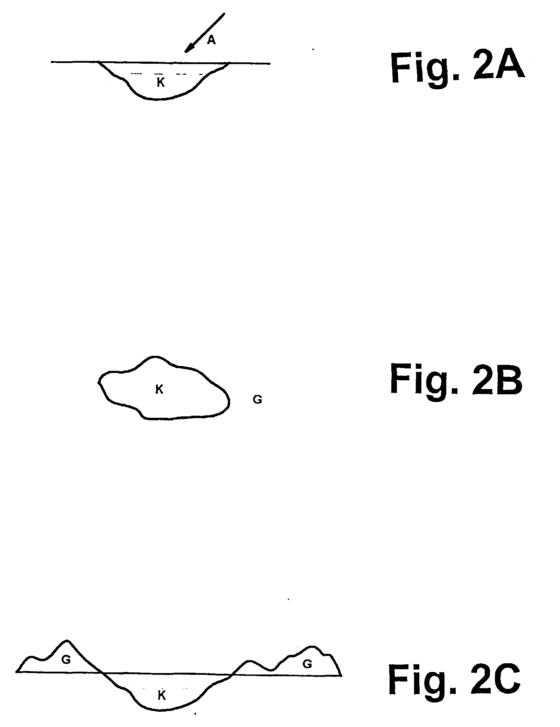

Beim Weisslicht-Reflexions-Hologramm **WH** handelt es sich um ein virtuelles Hologramm; dieses ist so ausgebildet, dass die holographische Abbildung gemäss **Fig. 2A** einem Betrachter, dessen Blickrichtung durch den Pfeil **A** angegeben ist, so erscheint, als ob sich die dargestellte dreidimensionale Fläche, im vorliegenden Falle also die Kavität **K**, jenseits der Trägerfolie **F** des hier als rein virtuelles Hologramm **VH** ausgebildeten Weisslicht-Reflexions-Hologrammes **WH** erstrecken und der Wasserspiegel **W** in die Ebene der Trägerfolie **F** des Weisslicht-Reflexions-Hologrammes **WH** fallen würde.

Fig. **2B** zeigt nur den Umriss der Kavität **K** bzw. die Ausdehnung des Wasserspiegels **W**, jedoch nicht die holographische Abbildung, wie sie der Betrachter sieht.

**Fig. 2C** zeigt ein weiteres Weisslicht-Reflexions-Hologramm **WH** mit derselben Kavität **K** wie **Fig. 2A**, wobei auch das die Kavität **K** umgebende Gelände **G** angegeben ist. Dieses Weisslicht-Reflexions-Hologramm **WH** ist als virtuelles/reales Hologramm **VH/RH** ausgebildet, und zwar so, dass die Kavität **K** einen virtuellen Hologrammbereich und das umgebende Gelände **G** einen realen Hologrammbereich bildet. Vom Beobachter aus in Richtung des Pfeiles **A** gesehen liegen also scheinbar das Gelände **G** diesseits und die Kavität **K** jenseits der Trägerfolie **F**, und der Wasserspiegel **W** fällt mit der Trägerfolie **F** zusammen.

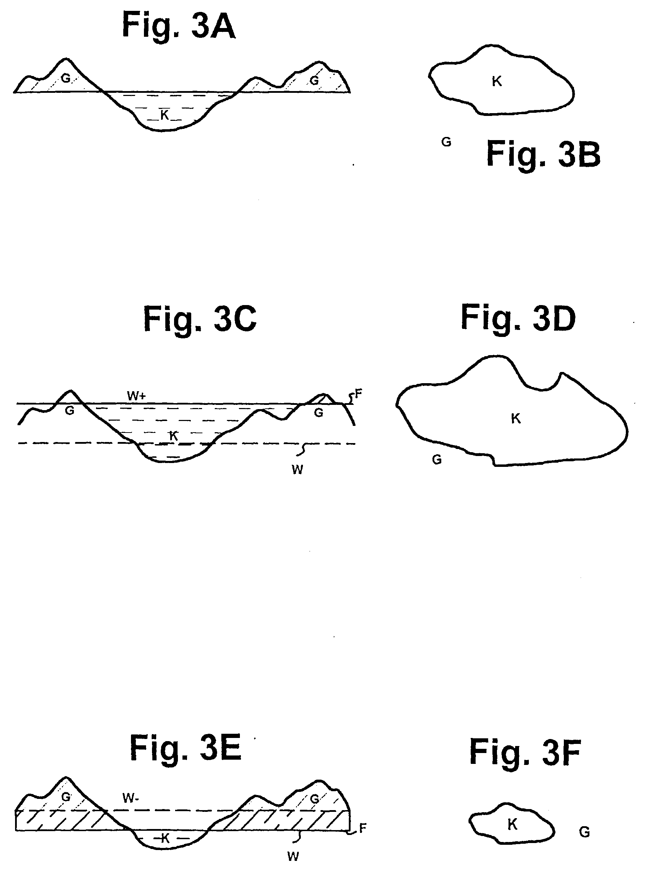

Die **Fig. 3A** bis **3E** betreffen Abbildungen der Kavität **K** eines Sees und des ihn umgebenden Geländes **G**, wobei gemäss Fig. **3A**, **3B** der Wasserspiegel **W** in seiner normalen Höhe liegt, während gemäss **Fig. 3C, 3D** der Wasserspiegel **W+** über und gemäss **Fig. 3E, 3F** der Wasserspiegel **W-** unter dem normalen Wasserspiegel **W** liegt. **Fig. 3A** entspricht also einem Karten-Hologramm, das nach einem üblichen Verfahren hergestellt ist. **Fig. 3C** und **Fig. 3E** entsprechen bearbeiteten Karten-Hologrammen, wie sie beispielsweise zur Simulierung von Überflutungen infolge von Hochwasser oder Aufstauungen bzw. von Wasserabsenkungen verwendet werden können. Die fiktive Anhebung oder Absenkung des Wasserspiegels kann beispielsweise direkt durch in der Holographietechnik bekannte Verfahrensschritte wie beispielsweise Superpositionen erfolgen.

Entsprechend können auch Änderungen simuliert bzw. anschaulich dargestellt werden, die sich bei beabsichtigten Terrain-Aufschüttungen oder Terrain-Abgrabungen ergeben.

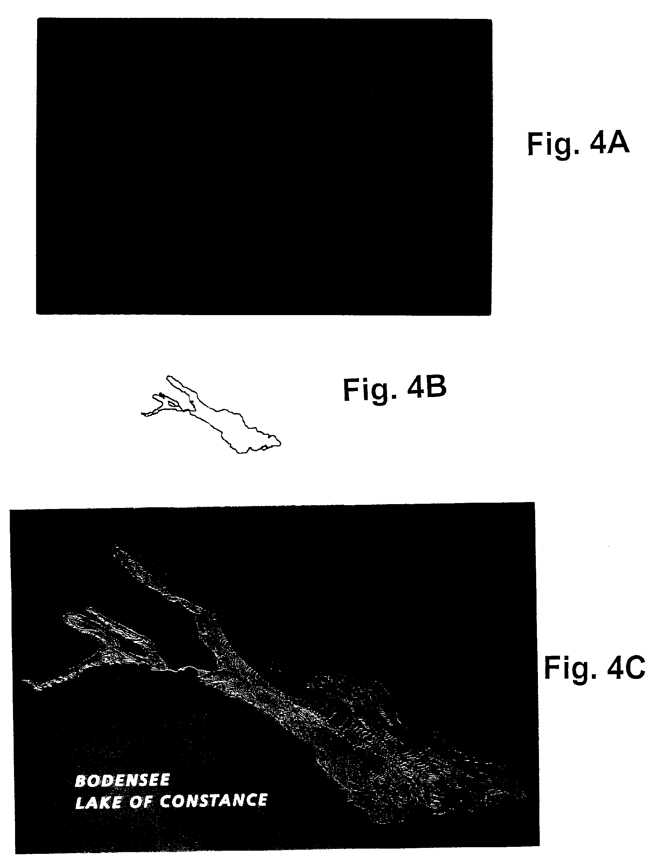

**Fig. 4A** ist ein Beispiel eines als Weisslicht-Reflexions-Hologramm **WH** ausgebildeten virtuellen Karten-Hologrammes, welches die Kavität **K** des Bodensees zeigt. Die eigentliche Trägerfolie des Kartenhologrammes ist hierbei auf einer Stabilisierungsfolie befestigt. **Fig. 4B** zeigt die Umrisse des Bodensees in zweidimensionaler Darstellung, wobei die Orientierung der üblichen Projektion von Landkarten entspricht, und **Fig. 4C** zeigt eine fotographische Aufnahme des Weisslicht-Hologrammes **WH** des Bodensees.

## Patentansprüche

1. Reliefartig erscheinende Abbildung eines Ausschnittes (**K, G**) der Oberfläche eines Himmelskörpers auf einer Trägerfolle (**F**),
**dadurch gekennzeichnet,**
dass die Abbildung ein topographisches Karten-Hologramm (**MH, WH, VH, RH, VH/RH**) ist.

2. Reliefartig erscheinende Abbildung (**MH, WH, VH, RH, VH/RH**) nach Anspruch **1**,
**dadurch gekennzeichnet,**
dass das Karten-Hologramm ein unter Weisslicht betrachtbares Hologramm, beispielsweise ein Weissticht-Reflexions-Hologramm (**WH**) oder ein Regenbogen-Präge-Hologramm, ist.

3. Reliefartig erscheinende Abbildung (**MH, WH, VH, RH, VH/RH**) nach einem der Ansprüche **1** bis **2**,
**dadurch gekennzeichnet,**
dass das Karten-Hologramm ein virtuelles Hologramm (**VH**), ein reales Hologramm (**RH**) oder ein kombiniertes Hologramm (**VH/RH**) mit virtuellen und realen Hologrammbereichen ist, wobei Teile des Ausschnittes, die oberhalb einer bestimmten Meereshöhe liegen, die realen Hologrammbereiche und Teile des Ausschnittes, die unterhalb der bestimmten Meereshöhe liegen, virtuelle Hologrammbereiche bilden.

4. Reliefartig erscheinende Abbildung (**MH, WH, VH, RH, VH/RH**) nach Anspruch **3**,
**dadurch gekennzeichnet,**
dass die bestimmte Meereshöhe die Meereshöhe eines Wasserspiegels (**W, W+, W-**) ist.

5. Verfahren zur Herstellung einer reliefartig erscheinenden Abbildung (**MH, WH, VH, RH, VH/RH**) eines Ausschnittes der Oberfläche eines Himmelskörpers auf einer Trägerfolie (F),
**dadurch gekennzeichnet,**
- dass die Form des Ausschnittes in digitalen Daten als digitales Terrain-Modell (**DTM**) erstellt wird, und
- dass aufgrund des digitalen Terrain-Modells (**DTM**) ein Master-Hologramm (**MH**) erzeugt wird.

6. Verfahren nach Anspruch **5**,
**dadurch gekennzeichnet**,
dass aufgrund des Master-Hologramms (**MH**) ein Dichromat-Glas-Hologramm, ein Weisslicht-Reflexions-Hologramm (**WH**) oder ein Regenbogen-Präge-Hologramm hergestellt wird.

7. Verfahren nach mindestens einem der Ansprüche **5** bis **6**,
**dadurch gekennzeichnet,**
dass die digitalen Daten des digitalen Terrain-Modells (**DTM**) aus einer zweidimensionalen Darstellung, insbesondere einer Kurvenkarte (**KK**) mit äquidistanten Höhenlinien, ermittelt werden.

8. Verfahren nach mindestens einem der Ansprüche **5** bis **6**,
**dadurch gekennzeichnet,**
dass die digitalen Daten des digitalen Terrain-Modells (**DTM**) einer Kavität eines Gewässers durch eine Echolot-Messung (**EL**) ermittelt werden.

9. Verwendung einer Abbildung (**MH, WH, VH, RH, VH/RH**) nach einem der Ansprüche **1** bis **5**,
**dadurch gekennzeichnet,**
dass die Abbildung (**MH, WH, VH, RH, VH/RH**) in unbearbeiteter Form verwendet wird.

10. Verwendung einer Abbildung (**MH, WH, VH, RH, VH/RH**) nach einem der Ansprüche **1** bis **5**,
**dadurch gekennzeichnet,**
dass die Abbildung (**MH, WH, VH, RH, VH/RH**) in bearbeiteter Form verwendet wird, um beispielsweise einen fiktiven, vom üblichen Wasserspiegel (**W**) abweichenden Wasserspiegel (**W+, W-)** zu simulieren.
